# EUROPEAN PATENT APPLICATION

(11) **EP 4 425 454 A1**
(43) Date of publication of application: **04.09.2024**
(21) Application number: 22886119.1
(22) Date of filing: 28.10.2022
(51) Int. Cl.: G07C 9/20

(54) **SIGNAL PROCESSING METHOD AND RELATED DEVICE**

(30) Priority: 28.10.2021 CN 202111261310
(71) Applicant: Vivo Mobile Communication Co., Ltd., Dongguan, Guangdong 523863 (CN)
(72) Inventor: LI, Zhiguang, Dongguan, Guangdong 523863 (CN)
(74) Representative: Conti, Marco
(86) International application number: PCT/CN2022/128233
(87) International publication number: WO 2023/072244

(57) **Abstract**

A signal processing method and a related device are disclosed. An electronic device in the related device including a proximity detection circuit (10), a first coil antenna (20), a driving circuit (30), and a processor (40). A first terminal of the proximity detection circuit (10) is electrically connected to the first coil antenna (20), a second terminal of the proximity detection circuit (10) is electrically connected to the processor (40). The processor (40) is also electrically connected to a first terminal of the driving circuit (30), and a second terminal of the driving circuit (30) is electrically connected to the first coil antenna (20). The proximity detection circuit (10) performs detection for electrical information of the first coil antenna (20) and generates first information in a case that the electrical information indicates that a distance between the first coil antenna (20) and a second coil antenna (50) of a target apparatus is less than a preset distance. In a case of having received the first information, the processor (40) sends control information corresponding to the first information to the driving circuit (30), so as to trigger the driving circuit (30) to transmit, through the first coil antenna (20), a functional signal corresponding to the target apparatus.

## Description

### CROSS-REFERENCE TO RELATED APPLICATIONS

This application claims priority to Chinese Patent Application No. 202111261310.5, filed in China on October 28, 2021, which is incorporated herein by reference in its entirety.

### TECHNICAL FIELD

This application pertains to the field of communication technologies and specifically relates to a signal processing method and a related device.

### BACKGROUND

With the development of technologies, increasing number of users choose radio frequency identification (Radio Frequency Identification, RFID) technology for achieving access control functions. However, when an electronic device such as a mobile phone is controlled by a user to approach an access controller, the user needs to manually enable a card emulation function of an access control module, which makes operations cumbersome when the user executes access control functions using the electronic device.

### SUMMARY

This application is intended to provide a signal processing method and a related device, so as to solve the problem of cumbersome operations in execution of access control functions in the related art.

To solve the foregoing technical problem, this application is implemented as follows.

According to a first aspect, an embodiment of this application proposes an electronic device including a proximity detection circuit, a first coil antenna, a driving circuit, and a processor. A first terminal of the proximity detection circuit is electrically connected to the first coil antenna, and a second terminal of the proximity detection circuit is electrically connected to the processor. The processor is also electrically connected to a first terminal of the driving circuit, and a second terminal of the driving circuit is electrically connected to the first coil antenna.

The proximity detection circuit performs detection for electrical information of the first coil antenna, and generates first information in a case that the electrical information indicates that a distance between the first coil antenna and a second coil antenna of a target apparatus is less than a preset distance.

In a case of having received the first information, the processor sends control information corresponding to the first information to the driving circuit, so as to trigger the driving circuit to transmit, through the first coil antenna, a functional signal corresponding to the target apparatus.

According to a second aspect, an embodiment of this application proposes a signal processing method applied to the electronic device according to the first aspect, where the electronic device includes the proximity detection circuit, the first coil antenna, and the driving circuit, and the method includes:
generating the first information in a case that the electrical information of the first coil antenna detected by the proximity detection circuit indicates that the distance between the first coil antenna and the second coil antenna of the target apparatus is less than the preset distance; and
obtaining the control information corresponding to the first information and triggering, based on the control information, the driving circuit to transmit, through the first coil antenna, the functional signal corresponding to the target apparatus.

According to a third aspect, an embodiment of this application provides a signal processing apparatus applied to the electronic device according to the first aspect, where the electronic device includes the proximity detection circuit, the first coil antenna, and the driving circuit, and the apparatus includes:
a generating module configured to generate the first information in a case that the electrical information of the first coil antenna detected by the proximity detection circuit indicates that the distance between the first coil antenna and the second coil antenna of the target apparatus is less than the preset distance; and
a processing module configured to obtain the control information corresponding to the first information and trigger, based on the control information, the driving circuit to transmit, through the first coil antenna, the functional signal corresponding to the target apparatus.

According to a fourth aspect, an embodiment of this application provides an electronic device, where the electronic device includes a processor, a memory, and a program or instructions stored in the memory and capable of running on the processor, and when the program or instructions are executed by the processor, the steps of the method according to the second aspect are implemented.

According to a fifth aspect, an embodiment of this application provides a readable storage medium, where the readable storage medium has a program or instructions stored thereon, and when the program or instructions are executed by a processor, the steps of the method according to the second aspect are implemented.

According to a sixth aspect, an embodiment of this application provides a chip, where the chip includes a processor and a communication interface, the communication interface is coupled to the processor, and the processor is configured to run a program or instructions to implement the method according to the second aspect.

In embodiments of this application, the proximity detection circuit is configured in the electronic device, and detection of the distance between the first coil antenna and the second coil antenna of the target apparatus is implemented through the proximity detection circuit, thereby implementing the detection of the distance between the first coil antenna and the second coil antenna. To be specific, automatic detection of the distance between the first coil antenna and the second coil antenna can be implemented through the proximity detection circuit, and the first information is generated based on a detection result. In this way, the processor can trigger, based on the first information, the driving circuit to transmit, through the first coil antenna, the functional signal corresponding to the target apparatus. Therefore, manually triggering execution of a corresponding function is avoided, and operation steps for executing a function corresponding to the target apparatus are simplified.

Additional aspects and advantages of this application will be given in part in the following description, part of which will become apparent from the following description or be learned from the practice of this application.

### BRIEF DESCRIPTION OF DRAWINGS

FIG. 1 is a first structural block diagram of an electronic device according to an embodiment of this application;
FIG. 2a is a second structural block diagram of an electronic device according to an embodiment of this application;
FIG. 2b is a third structural block diagram of an electronic device according to an embodiment of this application;
FIG. 3 is a structural block diagram of an NFC module of an electronic device according to an embodiment of this application;
FIG. 4 is a flowchart of a signal processing method according to an embodiment of this application;
FIG. 5 is a structural diagram of a signal processing apparatus according to an embodiment of this application;
FIG. 6 is a structural diagram of an electronic device according to an embodiment of this application; and
FIG. 7 is a structural diagram of an electronic device according to another embodiment of this application.

### DESCRIPTION OF EMBODIMENTS

The embodiments of this application are described in detail below. Examples of the embodiments are shown in the accompanying drawings, and reference signs that are always the same or similar indicate the same or similar components or components with the same or similar functions. The embodiments described below with reference to the drawings are illustrative and merely for explaining this application. They should not be construed as limitations on this application. All other embodiments obtained by persons of ordinary skill in the art based on the embodiments of this application without creative efforts shall fall within the protection scope of this application.

A feature modified by the term "first", "second", or the like in the specification and claims of this application can explicitly or implicitly include one or more such features. In descriptions of this application, unless otherwise specified, "plurality" means two or more. In addition, in this specification and claims, "and/or" indicates at least one of the connected objects, and the character "/" generally indicates an "or" relationship between the contextually associated objects.

In the description of the embodiments of this application, unless otherwise specified and defined explicitly, the terms "connect", "join", and the like should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

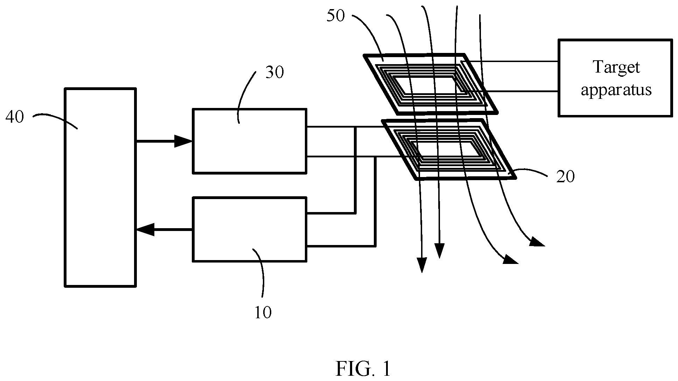

As shown in FIGs. 1 to 3, an embodiment of this application provides an electronic device. The electronic device includes a proximity detection circuit 10, a first coil antenna 20, a driving circuit 30, and a processor 40. A first terminal of the proximity detection circuit 10 is electrically connected to the first coil antenna 20, and a second terminal of the proximity detection circuit 10 is electrically connected to the processor 40. The processor 40 is also electrically connected to a first terminal of the driving circuit 30, and a second terminal of the driving circuit 30 is electrically connected to the first coil antenna 20.

The proximity detection circuit 10 performs detection for electrical information of the first coil antenna 20, and generates first information in a case that the electrical information indicates that a distance between the first coil antenna 20 and a second coil antenna 50 of a target apparatus is less than a preset distance.

In a case of having received the first information, the processor 40 sends control information corresponding to the first information to the driving circuit 30, so as to trigger the driving circuit 30 to transmit, through the first coil antenna 20, a functional signal corresponding to the target apparatus.

In this embodiment, the proximity detection circuit 10 is configured in the electronic device, and detection of the distance between the first coil antenna 20 and the second coil antenna 50 of the target apparatus is implemented through the proximity detection circuit 10, thereby implementing the detection of the distance between the first coil antenna 20 and the second coil antenna 50. To be specific, automatic detection of the distance between the first coil antenna 20 and the second coil antenna 50 can be implemented through the proximity detection circuit 10, and the first information is generated based on a detection result. In this way, the processor 40 can trigger, based on the first information, the driving circuit 30 to transmit, through the first coil antenna 20, the functional signal corresponding to the target apparatus. Therefore, manually triggering execution of a corresponding function is avoided, and operation steps for executing a function corresponding to the target apparatus are simplified.

It should be noted that the proximity detection circuit 10, after generating the first information, sends the first information to the processor 40, and the processor 40, after receiving the first information, generates corresponding control information based on the first information. Then, the processor 40 sends the control information to the driving circuit 30, and triggers, based on the control information, the driving circuit 30 to transmit, through the first coil antenna 20, the functional signal corresponding to the target apparatus.

Transmitting, through the first coil antenna 20, the functional signal corresponding to the target apparatus can be understood as transmitting or receiving, through the first coil antenna 20, the functional signal corresponding to the target apparatus.

It can be understood that when the two coil antennas are approaching each other, that is, when distance between the two coil antennas is less than a given value, the coil antennas generate a weak electrical signal. In this case, the proximity detection circuit 10 can be configured to perform detection for the electrical signal generated by the coil antennas. Moreover, to improve accuracy of a detection result by the proximity detection circuit 10, an amplifying module and an analog-to-digital converter (Analog to Digital Converter, ADC) may be further integrated in the proximity detection circuit 10. In addition, a logic judgment module may be further integrated in the detection circuit 10 to determine whether an electrical signal detected by the proximity detection circuit 10 indicates that the distance between the first coil antenna 20 and the second coil antenna 50 is within the preset distance range.

The distance between the first coil antenna 20 and the second coil antenna 50 can be understood as width of distance or a gap between the first coil antenna 20 and the second coil antenna 50 in a stacking direction of the first coil antenna 20 and the second coil antenna 50 when the first coil antenna 20 is stacked on the second coil antenna 50. Moreover, whether the first coil antenna 20 and the second coil antenna 50 are arranged in a stacked manner can be determined by sensing or performing detection for a spatial overlapping ratio of the first coil antenna 20 and the second coil antenna 50.

For example, in a case that the spatial overlapping ratio of the first coil antenna 20 and the second coil antenna 50 is greater than 60%, it is determined that the first coil antenna 20 and the second coil antenna 50 are arranged in a stacked manner spatially; and in the case that it is determined that the first coil antenna 20 and the second coil antenna 50 are arranged in a stacked manner spatially, the distance between the first coil antenna 20 and the second coil antenna 50 may be detected so as to determine whether the distance between the first coil antenna 20 and the second coil antenna 50 is less than the preset distance or a preset value.

The overlapping ratio threshold may be set based on actual requirements. The threshold 60% in the preceding example is for reference only.

In this embodiment, the electrical information includes at least one of voltage, frequency, and pulse duration. To be specific, the voltage, the frequency, and the pulse duration may be detected continuously through the proximity detection circuit 10 to determine positions of the first coil antenna 20 and the second coil antenna 50.

The target apparatus may be an access controller or a wireless charging apparatus, that is, the second coil antenna may be an access controller coil antenna or a wireless charging antenna.

For example, in a case that the target apparatus is an access controller, the first coil antenna may be a 125K coil antenna. Specifically, the proximity detection circuit 10 may perform detection for electrical information of the 125K coil antenna. In a case that the detected electrical information indicates that a distance between the 125K coil antenna and the access controller coil antenna is less than a preset distance, that is, in a case that the distance between the 125K coil antenna and the access controller coil antenna supports execution of a corresponding access control recognition function, first information is generated. Moreover, in a case of having received the first information, the processor 40 sends control information corresponding to the first information to the driving circuit 30, so as to trigger the driving circuit 30 to send corresponding card number information to a coil antenna of an access control card through the 125K coil antenna, so as to implement the access control recognition function. The driving circuit 30 may be an emulation driving circuit for a 125K low-frequency access control card, and the control information carries the card number information.

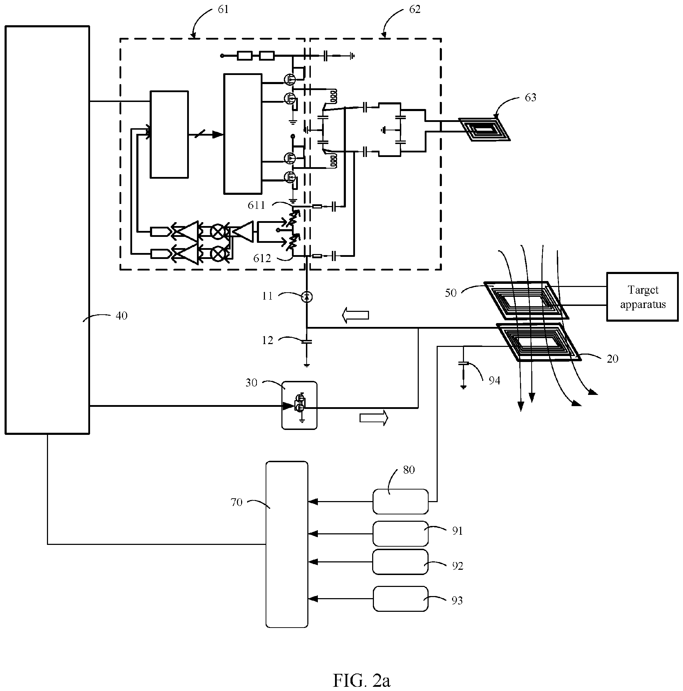

Optionally, as shown in FIG. 2a, the electronic device further includes a near field communication (Near Field Communication, NFC) function module 61. A first terminal of the NFC function module 61 is electrically connected to the processor 40, a second terminal of the NFC function module 61 is electrically connected to an NFC coil antenna 63 through an NFC tuning circuit 62, and the second terminal of the NFC function module 61 includes a first receiving port 611 and a second receiving port 612.

A path between the first terminal of the NFC function module 61 and a target receiving port is used for forming the proximity detection circuit 10, the target receiving port being one of the first receiving port 611 and the second receiving port 612.

In this embodiment, a signal amplitude detection function of the NFC function module 61 may be utilized to implement the detection of the electrical information of the first coil antenna 20. In this way, no extra proximity detection circuit is required on the electronic device, and investment of peripheral devices on the electronic device can be reduced.

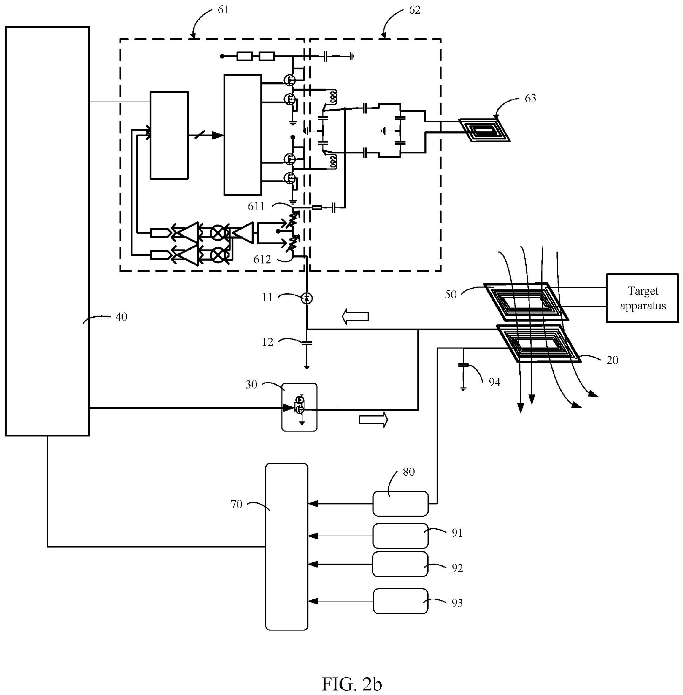

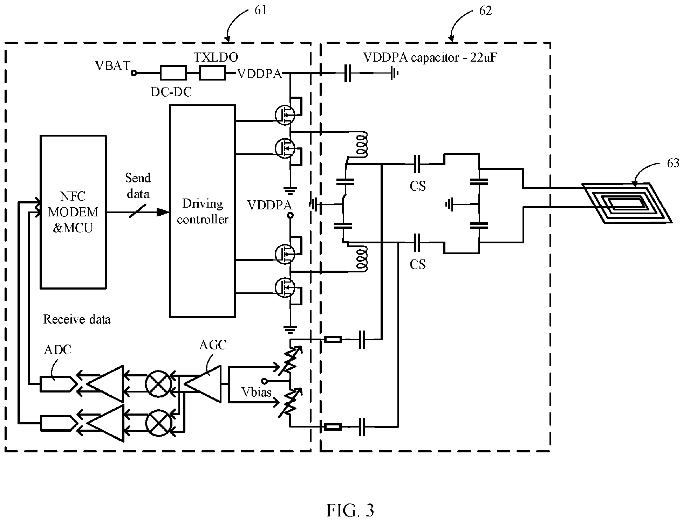

As shown in FIGs. 2 and 3, the NFC tuning circuit 62 includes a capacitor and an inductor and is formed by combination of the capacitor and the inductor. The NFC tuning circuit 62 may perform tuning processing on an NFC antenna signal to improve transmission and reception performance of the NFC coil antenna 63.

Moreover, it should be noted that the NFC tuning circuit 62 may further include another tuning element. The NFC tuning circuit 62 may be designed based on actual requirements, which is not specifically limited herein.

It can be understood that the first receiving port 611 and second receiving port 612 of the NFC function module 61 have functions such as automatic gain control, ADC, and signal amplitude detection. Therefore, in a case that the NFC function module 61 is operating normally, when the first coil antenna 20 approaches an access controller coil antenna, the target receiving port out of the first receiving port 611 and the second receiving port 612 may detect a change in the electrical information of the first coil antenna 20. In the case that the detected electrical information indicates that the distance between the first coil antenna 20 and the access controller coil antenna is less than the preset distance, a microcontroller unit in the NFC function module 61 generates the first information, so that the processor 40 can generate the corresponding control information based on the first information sent by the NFC function module 61, so as to trigger the driving circuit 30 to execute the access control recognition function through the first coil antenna 20.

The first receiving port 611 and the second receiving port 612 of the NFC function module 61 in this application have differential designs, so as to guarantee high transmit power and high sensitivity of the NFC function module 61. In addition, a first transmit port and a second transmit port of the NFC function module 61 may also have differential designs to guarantee high transmit power and high sensitivity of the NFC function module 61.

For example, when the first coil antenna 20 approaches a coil antenna or card reader of an access control card, an inductive voltage is generated on the first coil antenna 20, and this voltage raises a voltage of the target receiving port. In this case, the microcontroller unit in the NFC function module 61 can determine that the first coil antenna 20 approaches the coil antenna or card reader of the access control card, and generates first information. The processor 40 may generate corresponding control information based on the first information sent by the NFC function module 61, so as to trigger a corresponding card emulation function based on the control information, thereby implementing the access control recognition function.

It should be noted that the distance or a relative position deviation between the first coil antenna 20 and the coil antenna of the access control card may also be determined based on a magnitude of the voltage induced by the NFC function module 61, and then a user may be advised to place the first coil antenna 20 at a better position. In this way, user experience of access control recognition is improved.

Optionally, the proximity detection circuit 10 further includes a diode 11 and a first capacitor 12. A first terminal of the diode 11 is electrically connected to the target receiving port, a second terminal of the diode 11 is electrically connected to a first terminal of the first capacitor 12, a second terminal of the first capacitor 12 is grounded, and second terminal of the diode 11 is also electrically connected to the first coil antenna 20.

In this embodiment, integration of the diode 11 and the first capacitor 12 in the proximity detection circuit 10 can effectively improve the accuracy of the detection result by the proximity detection circuit 10.

In an example, the first capacitor 12 may be a high-frequency filter capacitor to improve the accuracy of the detection result by the proximity detection circuit 10.

Further optionally, as shown in FIG. 2b, the receiving port other than the target receiving port out of the first receiving port 611 and the second receiving port 612 is electrically connected to the NFC coil antenna 63 through the NFC tuning circuit 62 and used to transmit an antenna signal received by the NFC coil antenna 63, and the target receiving port and the NFC tuning circuit 62 are disconnected.

In this embodiment, the target receiving port and the NFC tuning circuit 62 are disconnected, to be specific, the electrical connection between the target receiving port and the NFC tuning circuit 62 is broken, that is, an NFC signal is received only through the receiving port other than the target receiving port out of the first receiving port 611 and the second receiving port 612, so that paths for the first coil antenna and the NFC coil antenna can be separated, reducing signal crosstalk and interference.

Moreover, during implementation of NFC card reading and card emulation functions, a proximity detection function of the electronic device can still work properly without asynchronous work required, effectively improving antenna function interoperability of the electronic device.

In addition, the electronic device further includes an audio module 70. A first terminal of the audio module 70 is electrically connected to the processor 40. A second terminal of the audio module 70 includes a first port, and the first port is electrically connected to the first coil antenna 20 through an envelope detection circuit 80. In this way, the audio module 70 and the envelope detection circuit 80 can be utilized to detect and obtain card number information of the first coil antenna 20.

The second terminal of the audio module 70 further includes a second port, a third port, and a fourth port. The second port is used for electrical connection with a primary microphone 91, the third port is used for electrical connection with a secondary microphone 92, and the fourth port is used for electrical connection with a headset microphone 93.

In addition, the electronic device further includes a second capacitor 94. A first terminal of the envelope detection circuit 80 is electrically connected to a first port 71, a second terminal of the envelope detection circuit 80 is electrically connected to the first coil antenna 20, the second terminal of the envelope detection circuit 80 is also electrically connected to a first terminal of the second capacitor 94, and a second terminal of the second capacitor 94 is grounded.

In a case that the target apparatus is an access controller, the second capacitor 94 may be a 125K resonant capacitor to improve transmission and reception performance of the first coil antenna 20.

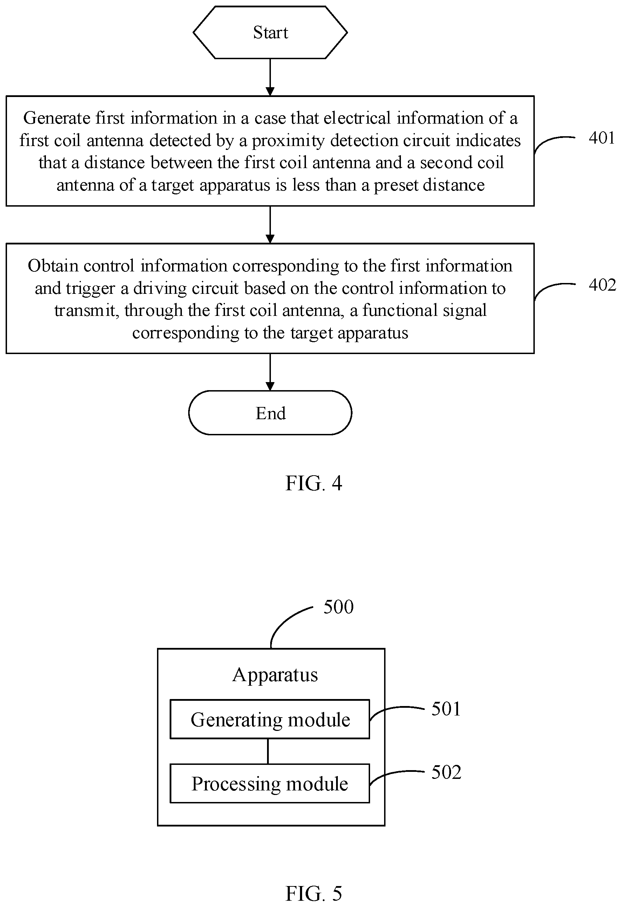

As shown in FIG. 4, an embodiment of this application further provide a signal processing method, where the method may be applied to the preceding electronic device, and the method includes the following steps.

Step 401: Generate the first information in a case that electrical information of the first coil antenna detected by the proximity detection circuit indicates that a distance between the first coil antenna and the second coil antenna of the target apparatus is less than a preset distance.

Step 402: Obtain control information corresponding to the first information and trigger, based on the control information, the driving circuit to transmit, through the first coil antenna, a functional signal corresponding to the target apparatus.

The proximity detection circuit is configured in the electronic device, and detection of the distance between the first coil antenna and the second coil antenna of the target apparatus is implemented through the proximity detection circuit, thereby implementing the detection of the distance between the first coil antenna and the second coil antenna. To be specific, automatic detection of the distance between the first coil antenna and the second coil antenna can be implemented through the proximity detection circuit, and the first information is generated based on a detection result. In this way, the processor can trigger, based on the first information, the driving circuit to transmit, through the first coil antenna, the functional signal corresponding to the target apparatus. Therefore, manually triggering execution of a corresponding function is avoided, and operation steps for executing a function corresponding to the target apparatus are simplified.

Optionally, the obtaining the control information corresponding to the first information includes:
obtaining basic information of the target apparatus; and
generating, based on the first information, control information corresponding to the basic information.

In this embodiment, the basic information, such as card number information of an access controller, of the target apparatus can be obtained through the audio module and envelope detection circuit of the electronic device. In a case of having received the first information, the processor can generate the corresponding control information based on the basic information of the target apparatus. The control information carries the basic information of the target apparatus, such as the card number information, so as to trigger execution of a corresponding function, thus implementing automatic triggering and avoiding manual triggering of the corresponding function.

According to the signal processing method provided in this embodiment of this application, the first information is generated in the case that the electrical information of the first coil antenna detected by the proximity detection circuit indicates that the distance between the first coil antenna and the second coil antenna of the target apparatus is less than the preset distance; the control information corresponding to the first information is obtained; and the driving circuit is triggered based on the control information to transmit, through the first coil antenna, the functional signal corresponding to the target apparatus. In this way, operation steps for executing a function corresponding to the target apparatus can be simplified.

It should be noted that the signal processing method provided in this embodiment of this application may be performed by a signal processing apparatus or a control module for performing the signal processing method in the signal processing apparatus. In embodiments of this application, the signal processing method being executed by the signal processing apparatus is used as an example to describe the signal processing apparatus provided according to the embodiments of this application.

Referring to FIG. 5, FIG. 5 is a structural diagram of a signal processing apparatus according to an embodiment of this application. As shown in FIG. 5, the apparatus 500 includes:
a generating module 501 configured to generate the first information in a case that electrical information of the first coil antenna detected by the proximity detection circuit indicates that a distance between the first coil antenna and the second coil antenna of the target apparatus is less than a preset distance; and
a processing module 502 configured to obtain control information corresponding to the first information and trigger, based on the control information, the driving circuit to transmit, through the first coil antenna, a functional signal corresponding to the target apparatus.

Optionally, the processing module 502 includes:
an obtaining unit configured to obtain basic information of the target apparatus; and
a generating unit configured to generate, based on the first information, control information corresponding to the basic information.

The signal processing apparatus in this embodiment of this application may be an apparatus, or may be a component, an integrated circuit, or a chip in a terminal. The apparatus may be a mobile electronic device or a non-mobile electronic device. For example, the mobile electronic device may be a mobile phone, a tablet computer, a notebook computer, a palmtop computer, a vehicular electronic device, a wearable device, an ultra-mobile personal computer (ultra-mobile personal computer, UMPC), a netbook, a personal digital assistant (personal digital assistant, PDA), or the like. The non-mobile electronic device may be a network attached storage (Network Attached Storage, NAS), a personal computer (personal computer, PC), a television (television, TV), a teller machine, a self-service machine, or the like. This is not specifically limited in the embodiments of this application.

The signal processing apparatus in this embodiment of this application may be an apparatus having an operating system. The operating system may be an android (Android) operating system, an iOS operating system, or another possible operating system. This is not specifically limited in the embodiments of this application.

The signal processing apparatus provided in this embodiment of this application can implement the processes implemented in the method embodiment in FIG. 4. To avoid repetition, details are not described herein again.

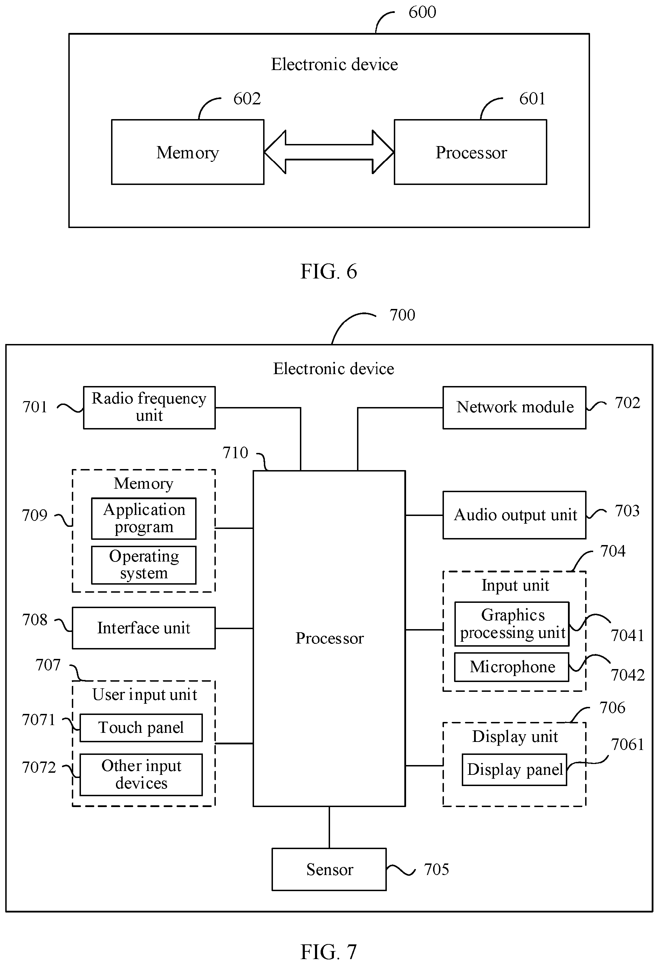

Optionally, as shown in FIG. 6, an embodiment of this application further provides an electronic device 600 including a processor 601, a memory 602, and a program or instructions stored in the memory 602 and capable of running on the processor 601. When the program or instructions are executed by the processor 601, the processes of the foregoing signal processing method embodiment are implemented, with the same technical effects achieved. To avoid repetition, details are not further described herein.

It should be noted that the electronic device in this embodiment of this application includes the foregoing mobile electronic device and non-mobile electronic device.

Referring to FIG. 7, FIG. 7 is a structural diagram of an electronic device according to an embodiment of this application. As shown in FIG. 7, the electronic device 700 includes but is not limited to components such as a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the electronic device 700 may further include a power supply (for example, a battery) that supplies power to the components. The power supply may be logically connected to the processor 710 via a power management system, so that functions such as charge and discharge management and power consumption management are implemented via the power management system. The structure of the electronic device shown in FIG. 7 does not constitute a limitation on the electronic device. The electronic device may include more or fewer components than shown in the figure, or combine some components, or arrange the components differently. Details are not described herein.

The processor 710 is configured to: generate the first information in a case that electrical information of the first coil antenna detected by the proximity detection circuit indicates that a distance between the first coil antenna and the second coil antenna of the target apparatus is less than a preset distance; and obtain control information corresponding to the first information, and trigger the driving circuit based on the control information to transmit, through the first coil antenna, a functional signal corresponding to the target apparatus.

Optionally, the processor 710 is configured to obtain basic information of the target apparatus and generate, based on the first information, control information corresponding to the basic information.

It should be understood that in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061. The display panel 7061 may be configured in a form of a liquid crystal display, an organic light-emitting diode display, or the like. The user input unit 707 includes a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein. The memory 709 may be configured to store software programs and various data which include but are not limited to application programs and operating systems. The processor 710 may integrate an application processor and a modem processor. The application processor mainly processes an operating system, a user interface, an application program, and the like. The modem processor mainly processes wireless communication. It can be understood that the modem processor may alternatively be not integrated in the processor 710.

An embodiment of this application further provides a readable storage medium having a program or instructions. When the program or instructions are executed by a processor, the processes of the foregoing signal processing method embodiment are implemented, with the same technical effects achieved. To avoid repetition, details are not described herein again.

The processor is the processor in the electronic device in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor, and the processor is configured to run a program or instructions to implement the processes of the foregoing signal processing method embodiment, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An electronic device, comprising a proximity detection circuit, a first coil antenna, a driving circuit, and a processor, wherein a first terminal of the proximity detection circuit is electrically connected to the first coil antenna, a second terminal of the proximity detection circuit is electrically connected to the processor, the processor is further electrically connected to a first terminal of the driving circuit, and a second terminal of the driving circuit is electrically connected to the first coil antenna; wherein
the proximity detection circuit performs detection for electrical information of the first coil antenna, and generates first information in a case that the electrical information indicates that a distance between the first coil antenna and a second coil antenna of a target apparatus is less than a preset distance; and
in a case of having received the first information, the processor sends control information corresponding to the first information to the driving circuit, so as to trigger the driving circuit to transmit, through the first coil antenna, a functional signal corresponding to the target apparatus.

2. The electronic device according to claim 1, wherein the electronic device further comprises a near field communication NFC function module; a first terminal of the NFC function module is electrically connected to the processor; a second terminal of the NFC function module is electrically connected to an NFC coil antenna through an NFC tuning circuit; and the second terminal of the NFC function module comprises a first receiving port and a second receiving port; wherein
a path between the first terminal of the NFC function module and a target receiving port is used for forming the proximity detection circuit, the target receiving port being one of the first receiving port and the second receiving port.

3. The electronic device according to claim 2, wherein the proximity detection circuit further comprises a diode and a first capacitor; a first terminal of the diode is electrically connected to the target receiving port; a second terminal of the diode is electrically connected to a first terminal of the first capacitor; a second terminal of the first capacitor is grounded; and the second terminal of the diode is also electrically connected to the first coil antenna.

4. The electronic device according to claim 3, wherein the receiving port other than the target receiving port out of the first receiving port and the second receiving port is electrically connected to the NFC coil antenna through the NFC tuning circuit and configured to transmit an antenna signal received by the NFC coil antenna; and the target receiving port and the NFC tuning circuit are disconnected.

5. The electronic device according to any one of claims 1 to 4, wherein the electrical information comprises at least one of voltage, frequency, and pulse duration.

6. A signal processing method, applied to the electronic device according to any one of claims 1 to 5, wherein the electronic device comprises the proximity detection circuit, the first coil antenna, and the driving circuit, and the method comprises:
generating the first information in a case that the electrical information of the first coil antenna detected by the proximity detection circuit indicates that the distance between the first coil antenna and the second coil antenna of the target apparatus is less than the preset distance; and
obtaining the control information corresponding to the first information and triggering, based on the control information, the driving circuit to transmit, through the first coil antenna, the functional signal corresponding to the target apparatus.

7. The method according to claim 6, wherein the obtaining the control information corresponding to the first information comprises:
obtaining basic information of the target apparatus; and
generating, based on the first information, control information corresponding to the basic information.

8. A signal processing apparatus, applied to the electronic device according to any one of claims 1 to 5, wherein the electronic device comprises the proximity detection circuit, the first coil antenna, and the driving circuit, and the apparatus comprises:
a generating module configured to generate the first information in a case that the electrical information of the first coil antenna detected by the proximity detection circuit indicates that the distance between the first coil antenna and the second coil antenna of the target apparatus is less than the preset distance; and
a processing module configured to obtain the control information corresponding to the first information and trigger, based on the control information, the driving circuit to transmit, through the first coil antenna, the functional signal corresponding to the target apparatus.

9. The apparatus according to claim 8, wherein the processing module comprises:
an obtaining unit configured to obtain basic information of the target apparatus; and
a generating unit configured to generate, based on the first information, control information corresponding to the basic information.

10. A readable storage medium, wherein the readable storage medium has a program or instructions stored thereon, and when the program or instructions are executed by a processor, the steps of the signal processing method according to claim 6 or 7 are implemented.

11. A chip, comprising a processor and a communication interface, wherein the communication interface is coupled to the processor, and the processor is configured to run a program or instructions to implement the steps of the signal processing method according to claim 6 or 7.
